# EUROPEAN PATENT SPECIFICATION

(11) **EP 1 957 343 B1**
(45) Date of publication and mention of the grant of the patent: **29.09.2010**
(21) Application number: 05824556.4
(22) Date of filing: 01.12.2005
(51) Int. Cl.: B62D 7/18

(54) **STEERING ASSEMBLY FOR AN AUTOMOTIVE VEHICLE**
LENKANORDNUNG FÜR EIN AUTOMOBIL
ENSEMBLE DE DIRECTION POUR UN VÉHICULE AUTOMOBILE

(43) Date of publication of application: 20.08.2008
(73) Proprietor: RENAULT TRUCKS, 69800 St Priest (FR)
(72) Inventor: BUE, Emmanuel, F-69100 Villeurbanne (FR)
(74) Representative: Putet, Gilles
(86) International application number: PCT/EP2005/014207
(87) International publication number: WO 2007/062684

(56) References cited:
- WO-A-01/81153
- US-A1- 2005 067 805

## Description

### TECHNICAL FIELD OF THE INVENTION

This invention concerns a steering assembly for an automotive vehicle. It also concerns a set of several such steering assemblies and an automotive vehicle equipped with at least one such steering assembly. Finally, the invention concerns a process for manufacturing such a steering assembly.

### BACKGROUND OF THE INVENTION

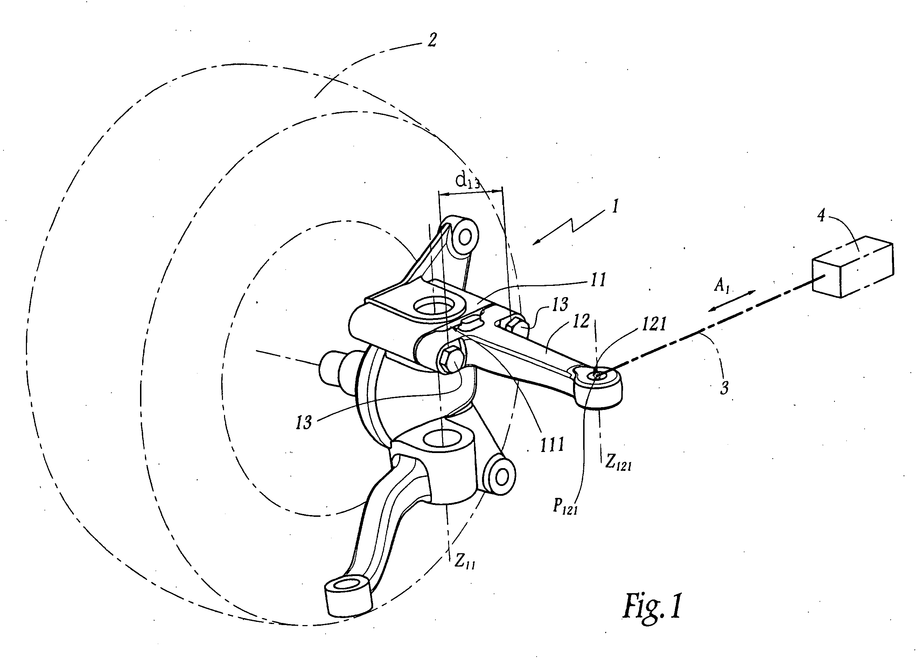

Steering assemblies are known to orientate the front wheels of a vehicle with respect to its longitudinal axis. Such a known steering assembly 1 is represented on figure 1 and includes a forged steering knuckle 11 which is adapted to support a wheel 2 and is adapted to rotate around an axis Z₁₁ perpendicular to the ground onto which wheel 2 rests. A T shaped steering arm 12 is mounted on knuckle 11 and pressed against a bearing surface 111 of knuckle 11 by two bolts 13.

Arm 12 is provided with a hole 121 which allows the connection of arm 12 to a drag link 3 adapted to reciprocate, as shown by arrow A₁, this drag link being driven by a steering gear 4.

One notes P₁₂₁ a central point of hole 121, this point being located on the central axis Z₁₂₁ of the hole 121, at the level of the upper surface of arm 12. This point determines the drivability or manoeuvrability of wheel 2 and must be located as precisely as possible in order hot to induce vibrations or movements in the steering wheel of the vehicle when the driver brakes or when the suspension of the vehicle works, working of the suspension depending on its rigidity, on the rigidity of the wheel axle and on the location of the steering gear 4. Therefore, the best location of point P₁₂₁ varies from one type of vehicle to another, depending on the equipment of the type of vehicle. This implies to use a great number of forged pieces 11 and 12, such pieces having to be produced and stored for all types of vehicles for production and maintenance purposes. With such known assemblies, it is also difficult to take into account modifications of the steering mechanism of a vehicle. The same problem arises with the assembly known from WO-A-01/81153, which forms the preamble of claims 1 and 10.

### SUMMARY OF THE INVENTION

The invention aims at providing a steering assembly which can easily be adapted to the actual configuration of a vehicle whereas its two main components can be forged, so that they can be produced in large quantities at relatively low cost.

To this aim, the invention concerns a steering assembly for an automotive vehicle, this assembly comprising a forged steering knuckle and a forged steering arm mounted on this knuckle by tightening means pressing a contact surface of the arm against a corresponding surface of the knuckle, the arm being adapted to be connected to a steering gear of the vehicle. This steering assembly is **characterized in that** the contact surface of the arm is parallel or substantially parallel to a longitudinal axis of this arm along which said arm extends and in that the contact surface of the steering arm and the corresponding surface of the steering knuckle are large enough so that the steering arm can be mounted onto the steering knuckle in different positions.

Thanks to the invention, the steering arm can be mounted onto the steering knuckle in different positions, which allows an adjustment of the geometry of the steering assembly, in order to improve the steering kinematics and the drivibility of the automotive vehicle.

According to further aspects of the invention, a steering assembly might incorporate one or several of the following features:
- The tightening means include at least one bolt inserted into a corresponding machine drilled hole extending through the steering arm, this hole being perpendicular or substantially perpendicular to the longitudinal axis of the steering arm, this hole being drilled in a part of the arm which is large enough to accommodate holes at different locations, so that different mounting configurations of the steering arm on the steering knuckle can be obtained.
- The angle between the contact surface of the steering arm and its longitudinal axis is lower than 30°.
- A hole is provided for the connection of the steering arm to a drag link driven by the steering gear, this hole being drilled in a part of the arm provided near its end opposite the knuckle, this part being large enough to accommodate holes at different locations so that the location of the central axis of this hole, with respect to axes defined by the knuckle, is adjustable.

The invention also concerns a set of steering assemblies for automotive vehicles of the kind described here above, wherein the angle between the contact surface and the longitudinal axis of the steering arm is different between at least two assemblies of such a set.

The invention also concerns a set of steering assemblies, each assembly having a tightening bolt and a corresponding hole as mentioned here above, wherein the location of the bolt receiving hole in the steering arm is different between at least two assemblies of such a set.

The invention also concerns a set of steering assemblies whose end opposite the knuckle is provided with a connecting hole for a drag link, the location of the connecting hole in the steering arm being different between at least to assemblies of such a set.

According to an advantageous aspect of the invention, in a set of steering assemblies as described here above, the cross section of at least a part of the steering arm might be different between at least two assemblies of this set.

The invention also concerns an automotive vehicle equipped with a steering assembly as described here above.

Finally, the invention concerns a process for manufacturing a steering assembly as mentioned here above, said process comprising the steps of :
a) - forging a steering knuckle ;
b) - forging a steering arm and
c) - mounting the arm on the knuckle
**characterized in that**, after forging the knuckle and the arm and prior to mounting the arm on the knuckle, this process comprising the step of
d) - drilling mounting holes in said arm at locations determined on the basis of some kinematic characteristics of the steering mechanism of the vehicle.

### BRIEF DESCRIPTION. OF THE DRAWINGS

The invention will be better understood on the basis of the following description, which is given in correspondence with the annexed figures and as an illustrative example, without restricting the object of the invention. In the annexed figures :
- figure 2 is an exploded perspective view of a steering assembly according to the invention ;
- figure 3 is a top view of the steering assembly of figure 2 ;
- figure 4A is a side view of the steering arm of the steering assembly of figures 2 and 3 ;
- figure 4B is a side view of the steering arm of figure 4A, showing the side of this arm opposite the one visible on figure 4A ;
- figure 5 is a top view of the steering arm of figures 4A and 4B ;
- figure 5A is a cross section along line A-A on figure 5 ;
- figure 6 is a side view of the steering assembly of figures 2 and 3, in the direction of arrow A₂ on figure 2 ;
- figure 7 is a view similar to figure 6 for another steering assembly according to the invention and belonging to the same set of steering assemblies as the one of figures 2 to 6 ;
- figure 8 is a side view similar to figure 4A for the steering arm of the assembly of figure 7 ;
- figure 9 is a view similar to figure 7 for a third assembly belonging to the same set;
- figure 10 is a side view similar to figure 4A for the steering arm of the assembly of figure 9 ;
- figures 11 and 12 are views similar to figure 5 showing different possible locations of the connecting hole of the steering arm ;
- figure 13 is a top view similar to figure 5 showing another steering arm belonging to a steering assembly belonging to the same set of steering assemblies as the ones of figures 2 to 12 ;
- figure 13A is a cross section along line A-A on figure 13 and
- figure 14 is a top view similar to figure 3 showing another steering assembly belonging to the same set of steering assemblies as the ones of figures 1 to 13.

### DETAILED DESCRIPTION OF SOME EMBODIMENTS

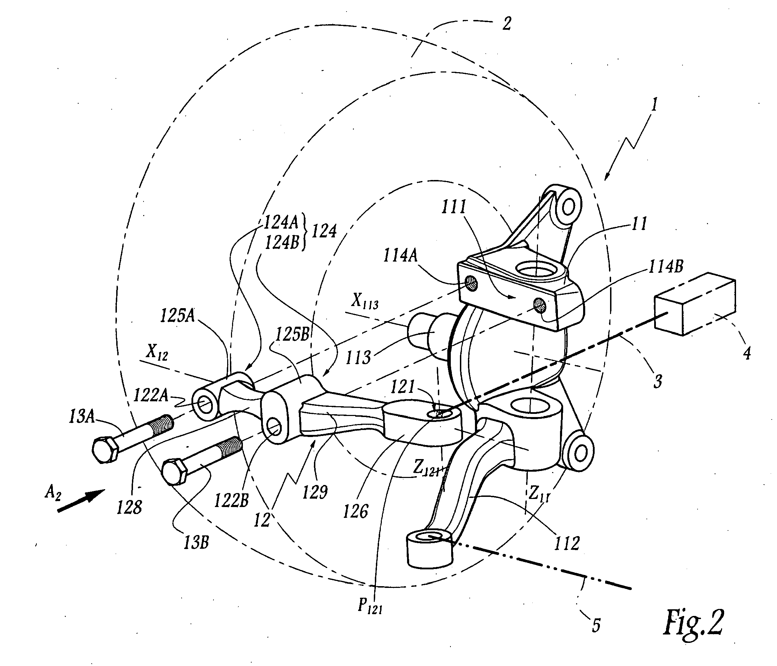

In the following description, the parts similar to the ones referred to on figure 1 have the same reference numbers. The left steering assembly 1 of figures 1 to 6 is adapted to be mounted on a truck. It includes a forged steering knuckle 11 adapted to support a wheel 2 of the truck and able to rotate around an axis Z₁₁. This knuckle supports a forged steering arm 12 which is supposed to be actuated by a drag link 3 driven by a steering gear 4. Knuckle 11 is also provided with a bracket 112 onto which a synchronisation rod 5 can be connected. This rod 5 drives the right steering knuckle, in rotation around an axis parallel to Z₁₁, as the result of the movements of assembly 1.

Arm 12 is connected, by a drag link engaging a hole 121 at the free end of the arm 12, to a steering gear 4. One note Z₁₂₁ the central axis of hole 121. One notes P₁₂₁ a point of axis Z₁₂₁ located at the level of the upper surface of arm 12.

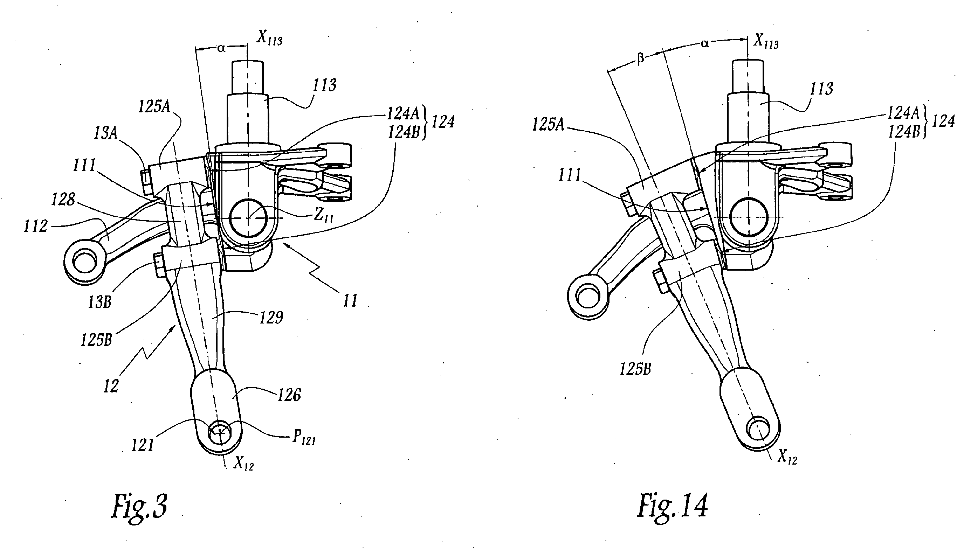

Steering knuckle 11 defines a bearing surface 111 which, in the top view of figure 3, makes an angle α of about 9° with axis X₁₁₃ of wheel supporting hub 113 of the knuckle 11. In practice, angle α can be chosen between 0 and 30°.

Two threaded holes 114A and 114B are drilled in surface 111 and adapted to receive two tightening bolts 13A and 13B which go respectively through two holes 122A and 122B drilled in arm 12.

Arm 12 extends along a longitudinal axis X₁₂ which is perpendicular to holes 122A and 122B. Axis X₁₂ and axis Z₁₂₁ define together a medial plane of arm 12, arm 12 being symmetrical with respect this plane.

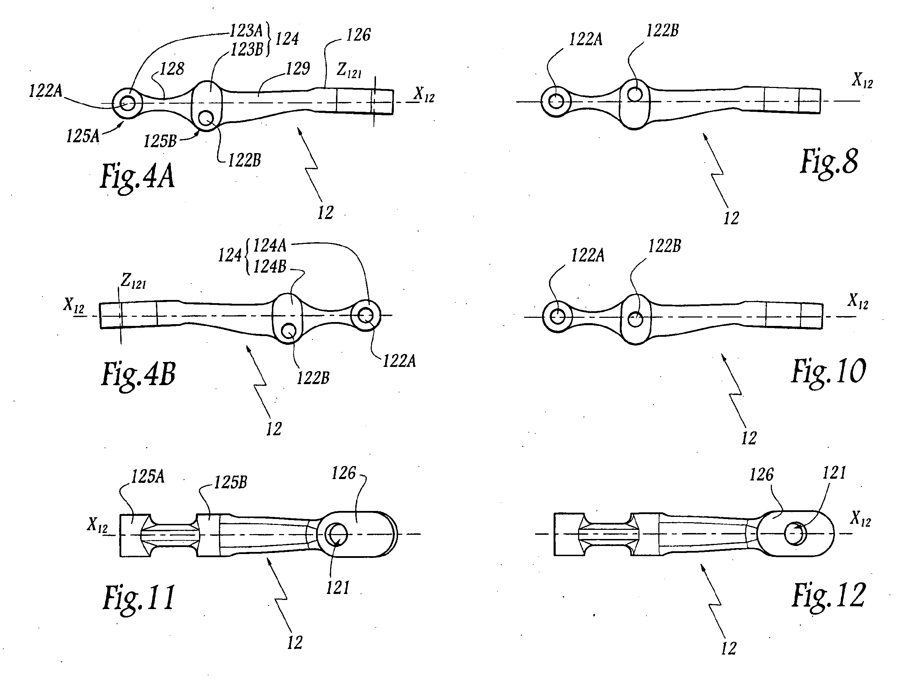

As shown on figures 4A and 4B, holes 122A and 122B are drilled between lateral surfaces 123A and 123B of arm 12 shown on figure 4A and opposite lateral surfaces 124A and 124B shown on figure 4B. Surfaces 124A and 124B constitute together a contact surface124 adapted to be pressed against bearing surface 111.

According to the invention, surface 124 is parallel to axis X₁₂.

Because of this construction of arm 12, knuckle 11 is modified with respect to the version of figure 1 in so far as bearing surface 111 is offset by an angle of about 80° with respect to the position of surface 111 in the prior art.

Thanks to the orientation and relative positions of surfaces 111 and 124, the position of the central axis Z₁₂₁ of hole 121 can be easily adapted in order to take into account the actual geometry and structure of the truck on which assembly 1 is mounted, as explained here-after.

Part 125B of arm 12 defined between surfaces 123B and 124B is large enough to be drilled at different locations to create hole 122B, as shown on figures 4A, 8 and 10. In other words, hole 122B can be drilled in part 125B in three positions represented on figures 4A, 8 and 10.

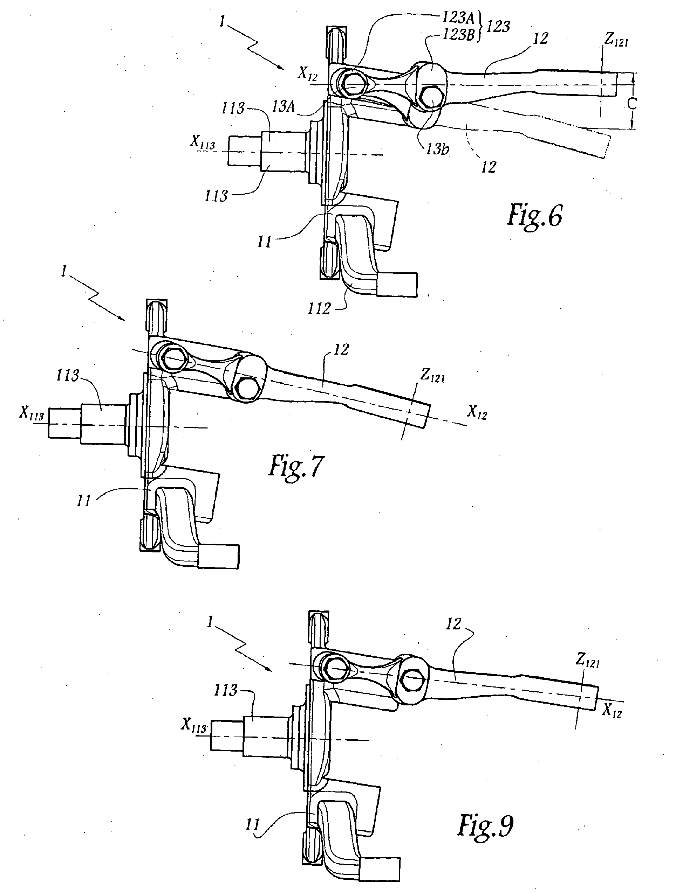

This permits three mounting configurations of arm 12 on knuckle 11, as shown respectively on figures 6, 7 and 9. On figure 6, arm 12 is represented in dashed lines in its position of figure 7 and C represents the adjusting vertical capacity of the position of the upper centre of hole 121 which can be obtained with the different possible geometries of arm 12.

According to a non represented embodiment of the invention, part 125A of arm 12 defined between surfaces 123A and 124A can also be large enough to be drilled at different locations to create hole 122A.

According to another non represented embodiment, hole 122B can be drilled in more than three locations in part 125B, depending on the desired accuracy of the setting possibilities of assemblies 1.

Hole 121 is drilled on a tab 126 formed at the free end of arm 12 opposite its part 125A. Parts 125A and 125B are connected by a rigid body 128 which is integral with parts 125A and 125B and the other parts of arm 12.

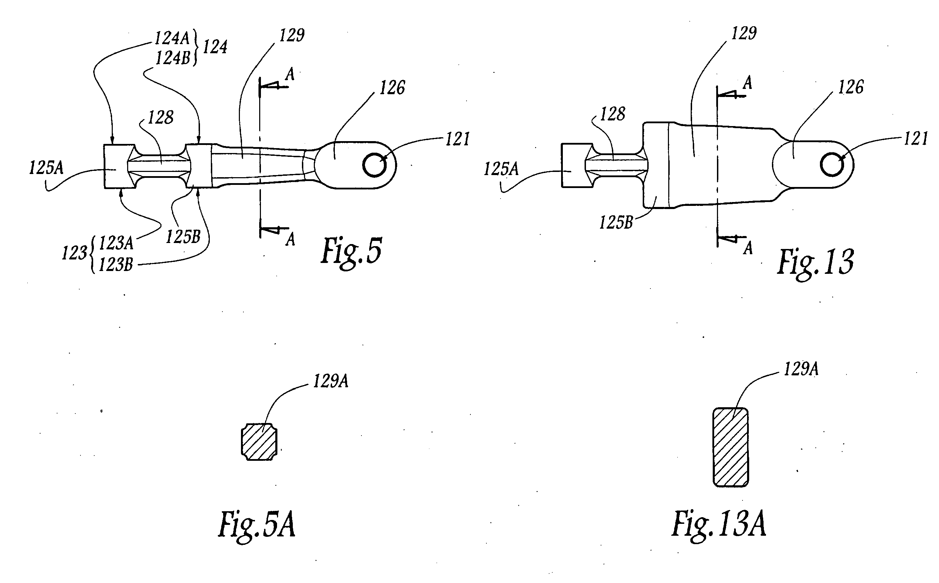

According to a further aspect of the invention, hole 121 can be drilled at several locations in tab 126, as shown on figures 5, 11 and 12.

If needed, connecting hole 121 can be drilled in more than three locations in tab 126.

Thanks to the invention, it is possible to adjust the location of central axis Z₁₂₁ with respect to axes X₁₃ and Z₁₁ by a proper positioning of holes 121 and 122B, respectively in parts 126 and 125B.

Therefore, arms 12 can be forged with a basic shape in large quantities and holes 121 and 122B can be drilled when the actual steering kinematics of the truck is determined, which might depend on the equipments and accessories of the vehicle, the mechanical characteristics of its suspension and/or the type of the vehicle.

As shown on figure 13, the orientation of bearing surface 124 with respect to longitudinal axis X₁₂ allows to easily modify the shape of its main stem 129 connecting part 125B to tab 126. A shown on figure 13A, the cross section S₁₂₉ of part 129 can be much larger for a vehicle where arm 12 must be very rigid, than in the case of figure 5A. Such a wide stem 129 would not be possible with the prior, art since the maximum width of this part is limited by the distance d₁₃ between bolts 13.

As shown on figure 14, the orientation of axis X₁₂ with respect to axis X₁₁₃ can also be modified by a modification of the orientation of bearing surface 111, that is by a modification of angle α. Alternatively or in addition, as shown on figure 14, angle β between surface 124 and axis X₁₂ might be non null, that is surface 124 might be non strictly parallel to X₁₂. This enables to adjust the position of axis Z₁₂₁ around axis Z₁₁. In practice, the value of angle β is kept lower than 50°, preferably lower than 30°, so that surface 124 and axis 12 can be considered as substantially parallel, even if they are not strictly parallel.

Modifications of the orientation of surfaces 111 with respect to axis X₁₁₃ and surface 124 with respect to axis X₁₂, that is of angles α and β, can be obtained by a proper machining of knuckle 11 and arm 12.

Thanks to the invention, the position of axis Z₁₂₁ with respect to axis Z₁₁ can be easily adjusted once parts 11 and 12 have been forged, by simple machining operations. Therefore, parts 11 and 12 can be produced in large quantities and adapted by machining to their actual configuration of use, which depends on the type of vehicle onto which assembly 1 is to be mounted.

The invention has been represented with surface 124 made of two separate surfaces 124A and 124B. It can also be made of a single surface.

The invention can be used for assemblies to be mounted on any kind of vehicle and is not limited to steering assemblies for trucks or lorries.

### LIST OF REFERENCES

- 1: steering assembly
11 steering knuckle
111 bearing surface
112 bracket
113 hub
114A, 114B threaded holes
12 steering arm
121 connecting hole
122A, 122B holes
123 surface 123A 123B surfaces 124 surface 124A, 124B surfaces 125A, 125B parts 126 tab 128 rigid body 129 stem 129A cross section of 129
- 13, 13A, 13B bolts 2: wheel
- 3: drag link
- 4: steering gear
- 5: synchronisation rod

- α: angle between 111 and X₁₁₃
- A₁: arrow
- A₂: arrow
- C: adjusting capacity
- d₁₃: distance between bolts 13A and 13B
- P₁₂₁: central point of 121
- S₁₂₉: cross section of 129
- X₁₂: axis of 12
- X₁₁₃: axis of 113
- Z₁₁: axis of rotation of 11
- Z₁₂₁: axis of 121

## Claims

1. A steering assembly for an automotive vehicle, said assembly comprising a forged steering knuckle (11) and a forged steering arm (12) mounted on said knuckle by tightening means (13A, 13B) pressing a contact surface (124) of said arm against a corresponding surface (111) of said knuckle, said arm being adapted to be connected (3) to a steering gear (4) of the vehicle, **characterized in that** said contact surface (124) is parallel or substantially parallel to a longitudinal axis (X₁₂) along which said arm extends and said contact surface (124) of said steering arm (12) and said corresponding surface (111) of said steering knuckle (11) are large enough so that said steering arm (12) can be mounted onto said steering knuckle (11) in different positions.

2. A steering assembly according to claim 1, **characterized in that** said tightening means include at least one bolt (13A, 13B) inserted in a corresponding machined drilled hole (122A, 122B) extending through said arm (12), said hole being perpendicular to said longitudinal axis (X₁₂), said hole (122B) being drilled in a part (125B) of said arm (12) which is large enough to accommodate holes at different locations so that different mounting configurations of said arm (12) on said knuckle (11) can be obtained.

3. A steering assembly according to one of claim 1 or 2 **characterized in that** an angle (β) between said contact surface (124) and said longitudinal axis (X₁₂) is lower than 30°.

4. A steering assembly according to one of the previous claims **characterized in that** a hole (121), for the connection of said arm (12) to a drag link (3) driven by said steering gear (4), is drilled in a part (126) of said arm provided near its end opposite said knuckle (11), said part being large enough to accommodate holes at different locations, so that the location of a central axis (Z₁₂₁) of said hole, with respect to axes (X₁₁₃, 2₁₁) defined by said knuckle, is adjustable.

5. A set of steering assemblies (1) for automotive vehicles, each assembly being according to one of the previous claims, **characterized in that** the angle (β) between the contact surface (124) and the longitudinal axis (X₁₂) of said steering arm (12) is different between at least two assemblies (1) of said set.

6. A set of steering assemblies for automotive vehicles, each assembly being according to one of the previous claims, **characterized in that** the location of the bolt receiving hole (122B) of said arm (12) is different between at least two assemblies of said set.

7. A set of steering assemblies for automotive vehicles, each being according to claim 4, **characterized in that** the location of the drag link connecting hole (121) of said arm (12) is different between at least two assemblies of said set.

8. A set of steering assemblies according to one of claim 5 to 7 **characterized in that** the cross section (S₁₂₉) of at least a part (129) of said arm (12) is different between at least two assemblies of said set.

9. An automotive vehicle equipped with at least one steering assembly (1) according to one of claims 1 to 4.

10. A process for manufacturing a steering assembly (1) according to one of claim 1 to 5 for an automotive vehicle, said process comprising the steps of:
a) -forging a steering knuckle (11) ;
b) - forging a steering arm (12) and
c) - mounting said arm on said knuckle
**characterized in that**, after forging said knuckle and arm and prior to mounting said arm on said knuckle, said process comprises the step of
d) - drilling mounting holes (121, 122B) in said arm at locations determined on the basis of some kinematic characteristics of the steering mechanism (1, 3, 4) of said vehicle.

## Patentansprüche

1. Lenkanordnung für ein Kraftfahrzeug, wobei die Anordnung einen geschmiedeten Achsschenkel (11) und einen geschmiedeten Spurhebel (12) umfasst, der an dem Achsschenkel mittels Anzugseinrichtungen (13A, 13B) angebracht ist, die eine Kontaktfläche (124) des Hebels gegen eine entsprechende Fläche (111) des Achsschenkels drücken, wobei der Hebel so angepasst ist, dass er mit einem Lenkgetriebe (4) des Fahrzeugs verbunden (3) werden kann, **dadurch gekennzeichnet, dass** die Kontaktfläche (124) parallel oder im Wesentlichen parallel zu einer Längsachse (X₁₂) ist, entlang welcher sich der Hebel erstreckt, und die Kontaktfläche (124) des Lenkhebels (12) und die entsprechende Fläche (111) des Achsschenkels (11) groß genug sind, so dass der Lenkhebel (12) in unterschiedlichen Positionen an dem Achsschenkel (11) angebracht werden kann.

2. Lenkanordnung nach Anspruch 1, **dadurch gekennzeichnet, dass** die Anzugseinrichtungen wenigstens einen Bolzen (13A, 13B) umfassen, der in ein entsprechendes gebohrtes Loch (122A, 122B) eingesetzt ist, das sich durch den Hebel (12) erstreckt, wobei das Loch senkrecht zu der Längsachse (X₁₂) ist, wobei das Loch (122B) in einen Teil (125B) des Hebels (12) gebohrt ist, der groß genug ist, um Löcher an unterschiedlichen Stellen aufzunehmen, so dass unterschiedliche Anbringungskonfigurationen des Hebels (12) an dem Achsschenkel (11) erhalten werden können.

3. Lenkanordnung nach einem der Ansprüche 1 oder 2, **dadurch gekennzeichnet, dass** ein Winkel (β) zwischen der Kontaktfläche (124) und der Längsachse (X₁₂) geringer als 30° ist.

4. Lenkanordnung nach einem der vorhergehenden Ansprüche, **dadurch gekennzeichnet, dass** ein Loch (121) für die Verbindung des Hebels (12) mit einer von dem Lenkgetriebe (4) angetriebenen Lenkstange (3) in einen Teil (126) des Hebels gebohrt ist, der in der Nähe seines dem Achsschenkel (11) entgegengesetzten Endes vorgesehen ist, wobei der Teil groß genug ist, um Löcher an unterschiedlichen Stellen aufzunehmen, so dass die Stelle der Mittelachse (Z₁₂₁) des Loches bezüglich der Achsen (X₁₁₃, Z₁₁), die von dem Achsschenkel definiert werden, einstellbar ist.

5. Satz von Lenkanordnungen (1) für Kraftfahrzeuge, wobei jede Anordnung nach einem der vorhergehenden Ansprüche ist, **dadurch gekennzeichnet, dass** der Winkel (β) zwischen der Kontaktfläche (124) und der Längsachse (X₁₂) des Lenkhebels (12) zwischen den zwei Anordnungen (1) des Satzes unterschiedlich ist.

6. Satz von Lenkanordnungen für Kraftfahrzeuge, wobei jede Anordnung nach einem der vorhergehenden Ansprüche ist, **dadurch gekennzeichnet, dass** die Stelle des Bolzenaufnahmeloches (122B) des Hebels (12) zwischen wenigstens zwei Anordnungen des Satzes unterschiedlich ist.

7. Satz von Lenkanordnungen für Kraftfahrzeuge, die jeweils nach Anspruch 4 sind, **dadurch gekennzeichnet, dass** die Stelle des Lenkstangenverbindungsloches (121) des Hebels (12) zwischen den zwei Anordnungen des Satzes unterschiedlich ist.

8. Satz von Lenkanordnungen nach einem der Ansprüche 5 bis 7, **dadurch gekennzeichnet, dass** der Querschnitt (S₁₂₉) wenigstens eines Teils (129) des Hebels (12) zwischen wenigstens zwei Anordnungen des Satzes unterschiedlich ist.

9. Kraftfahrzeug, das mit wenigstens einer Lenkanordnung (1) nach einem der Ansprüche 1 bis 4 ausgestattet ist.

10. Verfahren zur Herstellung einer Lenkanordnung (1) nach einem der Ansprüche 1 bis 5 für ein Kraftfahrzeug, wobei das Verfahren die Schritte umfasst:
a) Schmieden eines Achsschenkels (11),
b) Schmieden eines Lenkhebels (12) und
c) Anbringen des Hebels an dem Achsschenkel,
**dadurch gekennzeichnet, dass** nach dem Schmieden des Achsschenkels und des Hebels und vor der Anbringung des Hebels an dem Achsschenkel das Verfahren den Schritt umfasst:
d) Bohren von Anbringungslöchern (121, 122B) in dem Hebel an Stellen, die auf der Basis gewisser kinematischer Eigenschaften des Lenkmechanismus (1, 3, 4) des Fahrzeugs bestimmt wurden.

## Revendications

1. Un système de direction pour un véhicule automobile, ledit système comprenant un porte-fusée forgé (11) et un bras de direction forgé (12) monté sur ledit porte-fusée par des moyens de serrage (13A, 13B) qui serrent une surface de contact (124) dudit bras contre une surface correspondante (111) dudit porte-fusée, ledit bras étant adapté pour être connecté (3) à un équipement de direction (4) du véhicule, **caractérisé en ce que** ladite surface de contact (124) est parallèle ou substantiellement parallèle à un axe longitudinal (X₁₂) le long duquel s'étend ledit bras, et ladite surface de contact (124) dudit bras de direction (12) et ladite surface correspondante (111) dudit porte-fusée (11) sont suffisamment grandes pour que ledit bras de direction (12) puisse être monté sur ledit porte-fusée (11) en différentes positions.

2. Un système de direction selon la revendication 1, **caractérisé en ce que** lesdits moyens de serrage incluent au moins un boulon (13A, 13B) inséré dans un trou correspondant percé par usinage (122A, 122B) s'étendant au travers de dudit bras (12), ledit trou étant perpendiculaire audit axe longitudinal (X₁₂) , ledit trou (122B) étant percé dans une partie (125B) dudit bras (12) qui est suffisamment grande pour recevoir des trous à différentes positions de telle sorte que différentes configurations de montage dudit bras (12) sur ledit porte-fusée (11) puissent être obtenues.

3. Un système de direction selon l'une des revendications 1 ou 2, **caractérisé en ce qu'**un angle (β) entre ladite surface de contact (124) et ledit axe longitudinal (X₁₂) est inférieur à 30°.

4. Un système de direction selon l'une des revendications précédentes, **caractérisé en ce qu'**un trou (121), pour la connexion dudit bras (12) à une billette de direction (3) commandée par ledit équipement de direction (4), est percé dans une partie (126) dudit bras qui est disposée près de son extrémité opposée audit porte-fusée (11), ladite partie étant suffisamment grande pour recevoir des trous à différentes positions, de telle sorte que la position d'un axe central (Z₁₂₁) dudit trou, par rapport aux axes (X₁₁₃, Z₁₁) définis par ledit porte-fusée, soit ajustable.

5. Un jeu de systèmes de direction (1) pour des véhicules automobiles, chaque système étant selon l'une des revendications précédentes, **caractérisé en ce que** l'angle (β) entre ladite surface de contact (124) et ledit axe longitudinal (X₁₂) est différent pour au moins deux systèmes (1) dudit jeu.

6. Un jeu de systèmes de direction (1) pour des véhicules automobiles, chaque système étant selon l'une des revendications précédentes, **caractérisé en ce que** la position du trou (122B) recevant le boulon dudit bras (12) est différente pour au moins deux systèmes (1) dudit jeu.

7. Un jeu de systèmes de direction (1) pour des véhicules automobiles, chacun étant selon la revendication 4, **caractérisé en ce que** la position du trou (121) dudit bras (12) pour la connexion de la biellette de direction est différente pour au moins deux systèmes dudit jeu.

8. Un jeu de systèmes de direction selon l'une des revendications 5 à 7, **caractérisé en ce que** la section transversale (S₁₂₉) d'au moins une partie dudit bras (12) est différente pour au moins deux systèmes dudit jeu.

9. Un véhicule automobile équipé avec au moins un système de direction (1) selon l'une des revendications 1 à 4.

10. Un procédé pour fabriquer un système de direction (1) selon une des revendications 1 à 5 pour un véhicule automobile, ledit procédé comprenant les étapes consistant à :
a) forger un porte-fusée (11) ;
b) forger un bras de direction (12) et
c) monter ledit bras sur ledit porte-fusée
**caractérisé en ce que**, après avoir forgé ledit porte-fusée et ledit bras et avant de monter ledit bras sur ledit porte-fusée, ledit procédé comprend l'étape consistant à
d) percer des trous de montage (121, 122B) dans ledit bras à des positions déterminées sur la base de certaines caractéristiques du mécanisme de direction (1, 3, 4) dudit véhicule.
